# EUROPÄISCHE PATENTSCHRIFT

(11) **EP 1 794 540 B1**
(45) Veröffentlichungstag und Bekanntmachung des Hinweises auf die Patenterteilung: **22.04.2015**
(21) Anmeldenummer: 05777826.8
(22) Anmeldetag: 22.07.2005
(51) Int. Cl.: G01B 9/02, G01B 11/12, G01B 21/14, G01N 21/954, G02B 13/06, G02B 23/24, G03B 13/36

(54) **OPTISCHE MESSVORRICHTUNG ZUR VERMESSUNG VON MEHREREN FLÄCHEN EINES MESSOBJEKTES**
OPTICAL MEASURING DEVICE FOR MEASURING SEVERAL SURFACES OF A MEASURING OBJECT
DISPOSITIF DE MESURE OPTIQUE POUR MESURER PLUSIEURS SURFACES D'UN OBJET DE MESURE

(30) Priorität: 22.09.2004 DE 102004045808
(43) Veröffentlichungstag der Anmeldung: 13.06.2007
(73) Patentinhaber: ROBERT BOSCH GMBH, 70442 Stuttgart (DE)
(72) Erfinder: STRÄHLE, Jochen, 71287 Weissach (DE)
(86) Internationale Anmeldenummer: PCT/EP2005/053578
(87) Internationale Veröffentlichungsnummer: WO 2006/032561

(56) Entgegenhaltungen:
- DE-A1- 10 131 778
- US-A1- 2004 075 842
- US-B1- 6 462 815

## Beschreibung

### Stand der Technik

Die Erfindung betrifft eine optische Messvorrichtung zur Vermessung von mehreren Flächen eines Messobjektes mittels einer Anordnung von optischen Elementen. Weiter betrifft die Erfindung eine Verwendung der optischen Messvorrichtung als ein Objektiv für das Messobjekt.

Aus der US 2004/075842A1 ist ein Interferometer bekannt, bei dem eine kegelförmige Fläche und eine Schaftwand durch Drehen des Interferometers um seine Längsachse vermessen werden können.

Aus der US B1 - 6 462 815 ist ein Interferometer bekannt, bei dem eine kegelförmige Fläche und eine Schaftwand durch Drehen des Interferometers um seine Längsachse vermessen werden können.

Aus der DE 101 31 778 A1 ist eine optische Messvorrichtung bekannt, welche ausgebildet ist, mittels eines Linsensystems ein Rundumbild einer kegelförmigen Fläche zur interferometrischen Vermessung zu erzeugen.

Interferometrische Systeme eignen sich unter anderem für berührungslose Untersuchungen von Oberflächen verschiedener Messobjekte. Zur Erfassung der Oberflächenkontur eines zu untersuchenden Objektes trifft ein Objektstrahl aus einer Lichtquelle des Interferometers die Oberfläche an dem zu messenden Bereich. Der von der Oberfläche reflektierte Objektstrahl wird einem Detektor des Interferometers zugeführt und bildet zusammen mit einem Referenzstrahl ein Interferenzmuster, aus dem sich die Weglängendifferenz der beiden Strahlen ableiten lässt. Diese gemessene Weglängendifferenz der beiden Strahlen entspricht der Topographieänderung der Oberfläche.

Insbesondere mit einem Weisslichtinterferometer, bei dem die Lichtquelle eine kurzkohärente Strahlung abgibt, ist es auch möglich, das Messobjekt mittels Tiefenabtastung abzuscannen. Wie beispielsweise in der nicht vorveröffentlichten Patentanmeldung DE-103 25 443.9 erläutert, wird dabei die kurzkohärente Strahlung über einen Strahlteiler in einen Objektstrahl und in einen Referenzstrahl aufgeteilt. Die zu vermessende Objektoberfläche wird über ein Objektiv auf einen Bildaufnehmer, beispielsweise auf eine CCD-Kamera ("charge-coupled device"-Kamera), abgebildet und von der durch den Referenzstrahl gebildeten Referenzwelle überlagert. Die Tiefenabtastung kann durch Bewegen eines den Referenzstahl reflektierenden Referenzspiegels oder des Objektivs relativ zu der Messvorrichtung durchgeführt werden. Beim Bewegen des Objektes sind Bildebene des Objektes und Referenzebene in derselben Ebene. Während der Tiefenabtastung bleibt das Objekt starr im Gesichtsfeld der CCD-Kamera, und das Objekt wird nur in der Tiefenachse relativ zur Referenzebene bewegt. Auf diese Weise können Messungen technischer Oberflächen mit einer Tiefenauflösung im Bereich weniger Nanometer vermessen werden. Technische Grundlagen zu diesem Messverfahren findet man auch im Beitrag "Three-dimensional sensing of rough surfaces by coherence radar" (T. Dresel, G. Häusler, H. Venzke, Appl. Opt. 31 (7), p. 919-925, 1992).

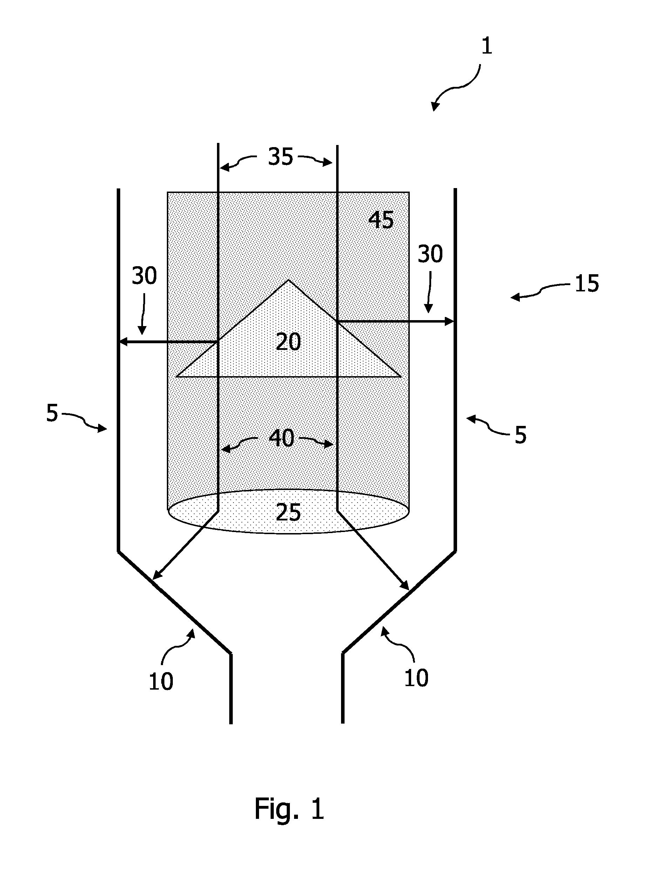

Ist dabei die zu vermessende Fläche des Messobjektes keine einheitliche, flache Ebene, so ist ein Spezial-Objektiv für das Vermessen des Messobjektes notwendig. Denn bei jedem Messvorgang muss dafür gesorgt werden, dass die Strahlen beim Abtasten möglichst senkrecht auf die zu vermessenden Flächen auftreffen. Aus der DE-101 31 778 A1 ist beispielsweise eine Anordnung von optischen Elementen bekannt, mit der auch gekrümmte Oberflächen vermessen werden können. So zeigt z. B. die Figur 1c aus der genannten Schrift, wie mit der dort vorgestellten Rundsichtoptik auch schwer zugängliche Messflächen wie die Innenfläche eines Zylinders bzw. einer Bohrung vermessen werden können. Mittels eines Ablenkprismas in der Rundsichtoptik werden die Strahlen senkrecht auf die Innenfläche der Bohrung gelenkt. In einem weiteren Ausführungsbeispiel kann die Rundsichtoptik, wie in Figur 1d in der genannten Schrift dargestellt, für eine innere Kegelfläche bei einem Übergangsbereich der Bohrung ausgelegt sein. Mit Hilfe der speziellen Optik werden die auf die Optik auftreffenden, parallelen Strahlen auf der Objektseite in Strahlen umgewandelt, die senkrecht auf die Kegelfläche stehen, d. h. die Strahlen werden aufgefächert. In der Praxis ist es jedoch vorteilhaft, wenn beide Flächen, also die Innenfläche einer Bohrung und die durch eine weitere Verengung der Bohrung hervorgerufene, innere Kegelfläche gleichzeitig vermessen werden kann. Solche Anforderungen entstehen zum Beispiel, wenn die Lage einer Führungsbohrung zu einem kegelförmigen Ventilsitz vermessen wird. Nach dem Stand der Technik können zwei oder mehr Rundsichtoptiken derart angeordnet und ausgelegt sein, dass gleichzeitig außer von einem Oberflächenbereich von mindestens einem weiteren Oberflächenbereich ein geebnetes Bild erzeugbar ist. Im Referenzlichtweg kann dann ebenfalls entsprechend der Anzahl der weiteren Oberflächenbereiche zum Erzeugen unterschiedlicher optischer Weglängen mindestens eine weitere Referenzebene angeordnet sein. So kann die Lage der Führungsbohrung zu einem räumlich getrennten Ventilsitz gemessen werden.

Mit nur einem Objektiv ist also die Vermessung der beiden Flächen nicht möglich. Eine einfache Kombination der beiden Ausführungsbeispiele mit einem Ablenkspiegel (Fig. 1c) und mit einer strahlen-auffächernden Optik (Fig. 1d) aus dem Stand der Technik führt nicht zu einem Erfolg, da die Strahlen entweder nur die Innenfläche der Bohrung oder nur die innere Kegelfläche erfassen würden, je nach Reihenfolge der Aufstellung der beiden optischen Elemente.

### Vorteile der Erfindung

Die erfindungsgemäße optische Messvorrichtung mit den in Anspruch 1 angegebenen Merkmalen und die Verwendung gemäss Anspruch 7 haben gegenüber dem Stand der Technik den Vorteil, dass die Vermessung von mehreren, schwer zugänglichen Flächen eines Messobjektes ermöglicht wird. Besonders vorteilhaft können die unterschiedlichen Messflächen wie kegelförmige Flächen und Innenflächen einer Bohrung schnell und ohne Änderung der Messvorrichtung vermessen werden. Die optische Messvorrichtung kann auch als Spezial-Objektiv für das Messobjekt in einem Messaufbau eines an sich bekannten Interferometers oder in einem Autofokus-Sensor verwendet werden. Vorteilhafte Weiterbildungen der interferometrischen Messvorrichtung sind in den Unteransprüchen angegeben und in der Beschreibung beschrieben.

### Zeichnung

Ausführungsbeispiele der Erfindung werden anhand der Zeichnung und der nachfolgenden Beschreibung näher erläutert. Es zeigen:
Figur 1 eine erste Ausführung einer Anordnung der optischen Elemente in der Messvorrichtung,
Figur 2 eine zweite Ausführung einer Anordnung der optischen Elemente in der Messvorrichtung,
Figur 3 einen interferometrischen Messaufbau mit der erfindungsgemäßen Messvorrichtung als Spezial-Objektiv, und
Figur 4 einen Bildaufnehmer mit einer Auswertesoftware für ein Doppelkorrelogramm.

### Beschreibung der Ausführungsbeispiele

Eine erste Ausführung der erfindungsgemäßen Messvorrichtung 1 mit einer Anordnung von optischen Elementen zeigt Figur 1. Als das Messobjekt 15 ist in diesem Beispiel eine Führungsbohrung dargestellt, deren Durchmesser sich über einen Übergangsbereich von einem konstant höheren Wert zu einem konstant niedrigeren Wert verändert. Der Übergangsbereich selbst weist eine stetige Verengung der Bohrung auf, wodurch sich die Flächenform eines Ausschnitts einer inneren Kegelfläche bildet. Eine solche Geometrie entspricht die einer Führungsbohrung mit einem kegelförmigen, d. h. konisch-geformten Ventilsitz. Die Innenwandung entspricht einer ersten Fläche 5 und der kegelförmige Ventilsitz einer zweiten Fläche 10 des zu vermessenden Messobjektes 15. Zur Vermessung der Innenwandung der Führungsbohrung und des kegelförmigen Ventilsitzes sind erfindungsgemäß als optische Elemente mindestens ein Strahlteiler 20 und ein Linsensystem 25 vorgesehen, wobei ein erster Teil 30 der auf den Strahlteiler 20 einfallenden Lichtstrahlen 35 senkrecht auf die erste Fläche 5 des Messobjektes 15 gerichtet wird, und ein zweiter Teil 40 der auf den Strahlteiler 20 einfallenden Lichtstrahlen 35 auf das dem Strahlteiler 20 nachgelagertes Linsensystem 25 auftritt und über das Linsensystem 25 senkrecht auf die zweite Fläche 10 gerichtet wird. Der Strahlteiler 20 lenkt den ersten Teil 30 der auf den Strahlteiler 20 einfallenden Lichtstrahlen 35 vorteilhaft rechtwinklig zur Einfallsrichtung ab. Der zweite Teil 40 der auf den Strahlteiler 20 einfallenden Lichtstrahlen 35 wird ohne jede Ablenkung auf das Linsensystem 25 gerichtet.

Damit die Lichtstrahlen 35 in den ersten 30 und in den zweiten 40 Teil aufgeteilt werden können, ist der Strahlteiler 20 halblichtdurchlässig, d. h. der erste Teil 30 der Lichtstrahlen 35 wird am Strahlteiler 20 reflektiert, während der zweite Teil 40 den Strahlteiler 20 durchdringt. In Figur 1 ist der Strahlteiler 20 ein halblichtdurchlässiges Prisma. Entsprechend der achsensymmetrischen Form des Messobjektes 15 weist der Strahlteiler 20, hier das Prisma, und/oder das Linsensystem 25 auch eine achsensymmetrische Form auf. Das Linsensystem 25 fächert den zweiten Teil 40 der Strahlen 35 kegelförmig auf, so dass er an jedem Ort auf dem kegelförmigen Ventilsitz senkrecht auftritt. Sowohl der erste Teil 30 als auch der zweite Teil 40 der durch den Strahlteiler 20 aufgeteilten Lichtstrahlen 35 wird an der ersten Fläche 5 bzw. zweiten Fläche 10 des Messobjektes 15 zurückreflektiert zur lichtstrahleinfallenden, objektabgewandten Seite der Messvorrichtung 1.

Die optischen Elemente sind üblicherweise in einem Tubus 45, insbesondere in einem Austrittsbereich des Tubus 45, angeordnet. An den Stellen, an denen der erste 30 oder der zweite Teil 40 der Lichtstrahlen 35 aus dem Tubus aus- bzw. nach der jeweiligen Reflexion in den Tubus wieder eintreten, besteht der Tubus aus einem optisch transparenten Material oder entfällt ganz zur Ausbildung einer Aussparung. Aus Übersichtlichkeitsgründen ist das optisch transparente Material bzw. die Aussparung nicht in den Figuren dargestellt.

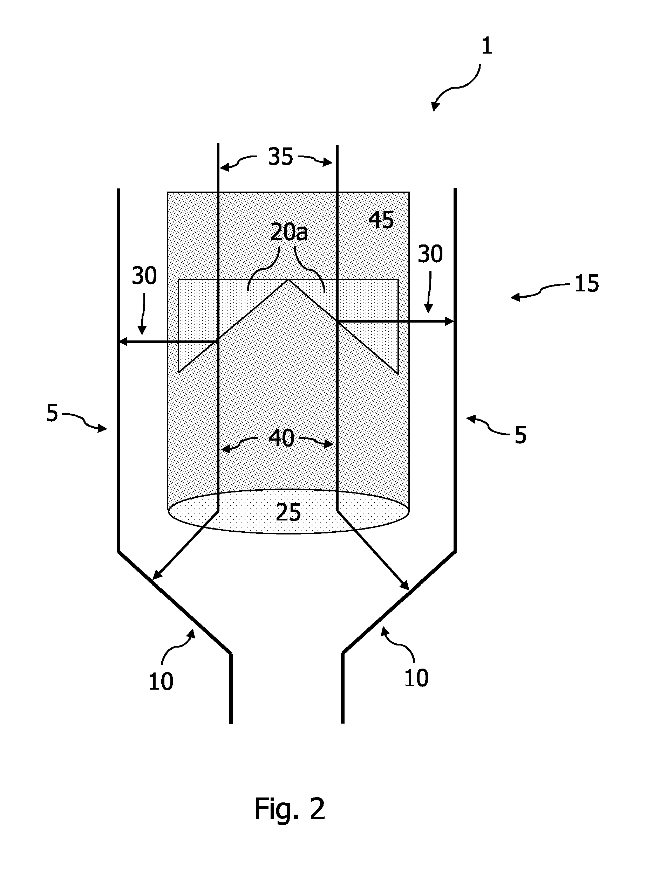

In der Figur 2 ist eine zweite Ausführungsform der Messvorrichtung 1 dargestellt. Sie unterscheidet sich von dem ersten Ausführungsbeispiel dadurch, dass der Strahlteiler 20a durch einen Hohlkegel gebildet wird, d. h. der Strahlteiler 20a ist eine halblichtdurchlässige Scheibe, die eine Aussparung in Form eines achsensymmetrischen Prismas aufweist.

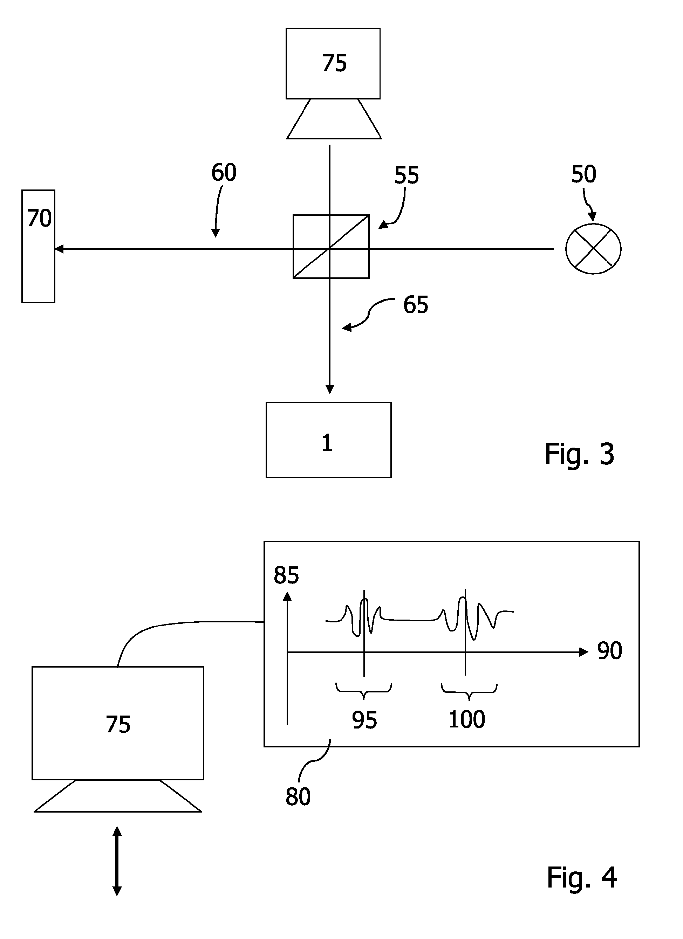

Die Messvorrichtung 1 eignet sich für eine Verwendung als ein Spezial-Objektiv für ein Messobjekt 15 in einem Messaufbau eines an sich bekannten Interferometers, insbesondere eines Weisslichtinterferometers. Ein Messaufbau nach Michelson ist in Figur 3 dargestellt und sein Messprinzip bekannt: Bei der Weisslichtinterferometrie(Kurzkohärenzinterferometrie) sendet eine Lichtquelle 50 eine kurzkohärente Strahlung aus. Das Licht wird über einen Strahlteiler 55 des Interferometers in einen Referenzstrahl 60 und in einen Objektstrahl 65 geteilt. Der Strahlteiler 55 des Interferometers ist von dem Strahlteiler 20, 20a der Messvorrichtung 1 zu unterscheiden. Der Referenzstrahl 60 wird weiter von einem im Referenzlichtweg angeordneten Referenzspiegel 70 reflektiert und gelangt wieder über den Strahlteiler 55 in einen Bildaufnehmer 75, vorteilhaft eine CCD- oder CMOS-Kamera ("complementary metal oxide semiconductor"-Kamera). Dort werden die Lichtwellen der Referenzstrahlen 60 überlagert mit den Lichtwellen der Objektstrahlen 65, die ihrerseits über das im Objektlichtweg angeordneten, erfindungsgemäßen Spezial-Objektiv auf die erste und zweite Fläche 5, 10 des Messobjektes 15 gelenkt und reflektiert wurden. Wie bereits geschildert, werden die Objektstrahlen 65 bzw. die auf den Strahlteiler 20, 20a der Messvorrichtung 1 einfallenden Lichtstrahlen 35 erfindungsgemäß in einen ersten 30 und zweiten Teil 40 aufgeteilt, um die Vermessung zweier Flächen zu ermöglichen. Natürlich ist eine Anwendung der Messvorrichtung 1 als ein Spezial-Objektiv auch in einem Messaufbau eines Autofocus-Sensors oder eines Laser-, Heterodyn- oder sonstigen Interferometers möglich.

Während der Messung ist eine relative Bewegung der Messvorrichtung 1 zum Messobjekt 15 oder umgekehrt vorzugsweise zu vermeiden. Daher ist die Messvorrichtung 1 als ein Spezial-Objektiv eines Interferometers mit einem Zwischenbild besonders geeignet. Solche Interferometer mit der Möglichkeit zur Erzeugung des Zwischenbildes sind aus dem Stand der Technik bekannt.

Im übrigen ist es wichtig, dass bei der Messung der ersten 5 und der zweiten Fläche 10 des Messobjektes 15 die beiden Flächen 5, 10 nicht gleichzeitig im Fokus des Bildaufnehmers 75 stehen. Die von den beiden Flächen 5, 10 reflektierten und in den Bildaufnehmer 75 überführten Strahlen würden dann zu einem gemeinsamen Interferenzbild überlagert und so die Messwerte verfälschen. Deshalb wird zuerst die erste Fläche 5 abgescannt, bis sie aus dem Interferenzbereich austritt, bevor die zweite Fläche 10 in den Interferenzbereich eintritt und auch abgescannt wird. Die Flächen 5, 10 können natürlich auch in umgekehrter Reihenfolge abgescannt werden. Um eine Überlappung des ersten 30 und des zweites Teils 40 der Lichtstrahlen 35 im Bildaufnehmer 75 zu vermeiden, muss auf die Anordnung der optischen Elemente der Messvorrichtung 1 bezüglich der Kohärenzlänge der Lichtstrahlen 35 geachtet werden. Unter einer Kohärenzlänge eines Wellenzugs versteht man die zur Interferenz notwendige Anschlusslänge für eine Überlappung. Die optischen Elemente der Messvorrichtung 1 sind daher unter Berücksichtigung der eben erläuterten Überlappungsbedingung so angeordnet, dass die optischen Wege des ersten 30 und des zweites Teils 40 der einfallenden Lichtstrahlen 35 mindestens in der Größenordnung einer Kohärenzlänge der Lichtstrahlen 35 unterschiedlich sind. Typischer Wertbereich einer Kohärenzlänge bei einem Weißlichtinterferometer beträgt etwa 2 bis 14 µm, während bei einem Heterodyn-Interferometer mit eingesetzten Wellenlängen von etwa 1570 µm eine Kohärenzlänge von etwa 80 µm ergibt.

Alternativ oder zusätzlich zu der Anordnung der Messvorrichtung 1 mit unterschiedlichen Weglängen für den ersten 30 und zweiten Teil 40 der Lichtstrahlen 35 kann eine störende Überlappung der beiden Teilstrahlen 30, 40 im Bildaufnehmer 75 dadurch verhindert werden, dass der Strahlteiler 20, 20a elektrisch oder magnetisch steuerbar ist, um seine Transmissions- und Reflexionseigenschaft gezielt zu variieren. So wird kurzfristig der Lichtweg des ersten 30 oder des zweiten Teils 40 der Lichtstrahlen 35 ausgeblendet.

In diesem Zusammenhang ist es vorteilhaft, einen Bildaufnehmer 75 mit einer Auswertesoftware für ein Doppelkorrelogramm 80 zu verwenden. Da erfindungsgemäß die optische Messvorrichtung 1 die Vermessung von mehreren Flächen 5, 10 eines Messobjektes 15 ermöglicht, muss der Bildaufnehmer 75 die von verschiedenen Flächen reflektierten Teilstrahlen entsprechend getrennt auswerten. Wie in Figur 4 verdeutlicht, wird das im Bildaufnehmer 75 erzeugte Interferenzmuster nach seiner Intensität 85 und nach Position 90 getrennt ausgewertet, so dass mit Hilfe der Auswertesoftware zwei aufeinanderfolgende Korrelogramme 95, 100 gebildet werden.

Zusammenfassend wird durch eine Aufteilung der Lichtstrahlen 35 in einen ersten 30 und zweiten Teil 40 in der Messvorrichtung 1 die Vermessung von mehreren Flächen 5, 10 eines Messobjektes 15 ermöglicht. Die Anordnung der optischen Elemente erlaubt insbesondere die Vermessung einer Innenfläche eines Zylinders und die einer konisch-geformten Fläche mit nur einer Messvorrichtung 1.

## Patentansprüche

1. Messanordnung umfassend ein Messobjekt (15) und eine optische Messvorrichtung (1) zur Vermessung einer ersten (5) und einer zweiten Fläche (10) eines Messobjektes (15) mittels einer Anordnung von optischen Elementen,
wobei das Messobjekt eine Führungsbohrung aufweist, deren Innenwandung der ersten Fläche (5) entspricht und die zweite Fläche (10) einem konisch ausgebildeten,
kegelförmigen Ventilsitz des zu vermessenden Messobjektes (15) entspricht,
**dadurch gekennzeichnet, dass**
als optische Elemente mindestens ein Strahlteiler (20; 20a) und ein Linsensystem (25) so angeordnet sind, dass ein erster Teil (30) der auf den Strahlteiler (20; 20a)
einfallenden Lichtstrahlen (35) senkrecht auf die erste Fläche (5) des Messobjektes (10) gerichtet wird, und ein zweiter Teil (40) der auf den Strahlteiler (20; 20a) einfallenden Lichtstrahlen (35) auf das dem Strahlteiler (20; 20a) nachgelagertes Linsensystem (25) auftritt und über das Linsensystem (25) senkrecht auf die zweite Fläche (10) gerichtet wird, wobei
der Strahlteiler (20; 20a) ein achsensymmetrisches kegelförmiges Prisma oder ein Hohlkegel ist und das Linsensystem (25) den zweiten Teil (40) der einfallenden Lichtstrahlen (35) kegelförmig auffächert, wobei die optischen Elemente so angeordnet sind, dass die optischen Wege des ersten (30) und des zweites Teils (40) der einfallenden Lichtstrahlen (35) mindestens in der Grössenordnung einer Kohärenzlänge der Lichtstrahlen (35) unterschiedlich sind.

2. Messanordnung nach Anspruch 1,
**dadurch gekennzeichnet, dass**
der Strahlteiler (20; 20a) den ersten Teil (30) der auf den Strahlteiler (20; 20a)
einfallenden Lichtstrahlen (35) rechtwinklig zur Einfallsrichtung ablenkt und/oder den zweiten Teil (40) der auf den Strahlteiler (20; 20a) einfallenden Lichtstrahlen (35) ohne jede Ablenkung auf das Linsensystem (25) richtet.

3. Messanordnung nach Anspruch 1 oder 2,
**dadurch gekennzeichnet, dass**
die Transmission und Reflexion des Strahlteilers (20; 20a) durch elektrische oder magnetische Steuerung variierbar ist.

4. Messanordnung nach Anspruch 3,
**dadurch gekennzeichnet, dass**
durch die elektrische oder magnetische Steuerung der Lichtweg des ersten 30 oder des zweiten Teils 40 der Lichtstrahlen 35 kurzfristig ausgeblendet werden kann.

5. Messanordnung nach einem der vorhergehenden Ansprüche , dadurchgekennzeichnet, dass der Strahlteiler (20; 20a) und/oder das Linsensystem (25) eine achsensymmetrische Form aufweist.

6. Messanordnung nach einem der vorhergehenden Ansprüche , dadurchgekennzeichnet, dass die optischen Elemente in einem Tubus (45), insbesondere in einem Austrittsbereich des Tubus (45), angeordnet sind.

7. Verwendung der Messanordnung mit der optischen Messvorrichtung (1) nach einem der vorhergehenden Ansprüche,
dadurchgekennzeichnet, dass
die Messvorrichtung (1) als ein Spezial-Objektiv für das Messobjekt (15) in einem Messaufbau eines Autofocus-Sensors oder eines an sich bekannten Interferometers, insbesondere eines Laser-, Heterodyn- oder Weisslichtinterferometers, verwendet wird.

8. Verwendung der Messanordnung mit der optischen Messvorrichtung (1) nach Anspruch 8, **dadurch gekennzeichnet, dass** die Messvorrichtung (1) zusammen mit einem Bildaufnehmer (75) mit einer Auswertesoftware für ein Doppelkorrelogramm (80) verwendet wird.

## Claims

1. Measurement arrangement comprising a measurement object (15) and an optical measurement device (1) for measuring a first (5) and a second surface (10) of a measurement object (15) by means of an arrangement of optical elements, the measurement object having a guide bore whose internal wall corresponds to the first surface (5), and the second surface (10) corresponding to a conically designed, conical valve seat of the measurement object (15) to be measured,
**characterized in that**
at least a beam splitter (20; 20a) and a lens system (25) are arranged as optical elements such that a first portion (30) of the light beams (35) incident on the beam splitter (20; 20a) is directed perpendicular to the first surface (5) of the measurement object (10), and a second portion (40) of the light beams (35) incident on the beam splitter (20; 20a) impinges on the lens system (25) arranged downstream of the beam splitter (20; 20a) and is directed vertically onto the second surface (10) via the lens system (25), the beam splitter (20; 20a) being an axially symmetric conical prism or a hollow cone, and the lens system (25) fanning out conically the second portion (40) of the incident light beams (35), the optical elements being arranged such that the optical paths of the first (30) and the second portion (40) of the incident light beams (35) differ at least by the order of magnitude of a coherence length of the light beams (35).

2. Measurement arrangement according to Claim 1, **characterized in that** the beam splitter (20; 20a) deflects the first portion (30) of the light beams (35) incident on the beam splitter (20; 20a) at right angles to the incidence direction, and/or directs the second portion (40) of the light beams (35) incident on the beam splitter (20; 20a) onto the lens system (25) without any deflection.

3. Measurement arrangement according to Claim 1 or 2, **characterized in that** the transmission and reflection of the beam splitter (20; 20a) can be varied by electrical or magnetic control.

4. Measurement arrangement according to Claim 3, **characterized in that** the light path of the first (30) or the second portion (40) of the light beams (35) can be faded out in the short term by the electrical or magnetic control.

5. Measurement arrangement according to one of the preceding claims, **characterized in that** the beam splitter (20; 20a) and/or the lens system (25) have/has an axially symmetric shape.

6. Measurement arrangement according to one of the preceding claims, **characterized in that** the optical elements are arranged in a tube (45), in particular in an exit area of the tube (45).

7. Use of the measurement arrangement having the optical measurement device (1) according to one of the preceding claims, **characterized in that** the measurement device (1) is used as a special objective for the measurement object (15) in a measurement setup of an autofocus sensor or of an interferometer known per se, in particular a laser, heterodyne or white light interferometer.

8. Use of the measurement arrangement having the optical measurement device (1) according to Claim 8, **characterized in that** the measurement device (1) is used together with an image recorder (75) having evaluation software for a double correlogram (80).

## Revendications

1. Dispositif de mesure comprenant un objet de mesure (15) et un dispositif de mesure optique (1) pour mesurer une première (5) et une deuxième surface (10) d'un objet de mesure (15) à l'aide d'un agencement d'éléments optiques ;
l'objet de mesure comportant un alésage de guidage dont la paroi intérieure correspond à la première surface (5) et la deuxième surface (10) correspond à un siège de soupape en forme de cône, réalisé de façon conique, de l'objet de mesure (15) à mesurer ;
**caractérisé en ce que** :
les éléments optiques utilisés comprennent au moins un diviseur de faisceau (20 ; 20a) et un système de lentilles (25) disposés de telle sorte qu'une première partie (30) des faisceaux lumineux (35) rencontrant le diviseur de faisceau (20 ; 20a) est orientée perpendiculairement sur la première surface (5) de l'objet de mesure (10) et qu'une deuxième partie (40) des faisceaux lumineux (35) rencontrant le diviseur de faisceau (20 ; 20a) rencontre le système de lentilles (25) disposé en aval du diviseur de faisceau (20 ; 20a) et est orientée via le système de lentilles (25) perpendiculairement sur la deuxième surface (10) ;
le diviseur de faisceau (20 ; 20a) étant un prisme ou un cône creux symétrique à l'axe en forme de cône et le système de lentilles (25) évasant en forme de cône la deuxième partie (40) des faisceaux lumineux (35) incidents, les éléments optiques étant agencés de telle sorte que les trajets optiques de la première (30) et de la deuxième partie (40) des faisceaux lumineux (35) incidents sont au moins d'ordres de grandeur différents pour ce qui est de la longueur de cohérence des faisceaux lumineux (35).

2. Dispositif de mesure selon la revendication 1, **caractérisé en ce que** le diviseur de faisceau (20 ; 20a) dévie la première partie (30) des faisceaux lumineux (35) incidents sur le diviseur de faisceau (20 ; 20a) à angle droit par rapport à la direction d'incidence et/ou oriente la deuxième partie (40) des faisceaux lumineux (35) incidents sur le diviseur de faisceau (20 ; 20a) sur le système de lentilles (25), sans chaque déviation.

3. Dispositif de mesure selon la revendication 1 ou 2, **caractérisé en ce que** la transmission et réflexion du diviseur de faisceau (20 ; 20a) peut varier grâce à l'élément de commande électrique ou magnétique.

4. Dispositif de mesure selon la revendication 3, **caractérisé en ce que** le chemin lumineux de la première 30 ou de la deuxième partie 40 des faisceaux lumineux 35 peut être masqué à court terme grâce à l'élément de commande électrique ou magnétique.

5. Dispositif de mesure selon l'une quelconque des revendications précédentes, **caractérisé en ce que** le diviseur de faisceau (20 ; 20a) et/ou le système de lentilles (25) présente une forme symétrique à l'axe.

6. Dispositif de mesure selon l'une quelconque des revendications précédentes, **caractérisé en ce que** les éléments optiques sont disposés dans un tube (45), notamment dans une zone de sortie du tube (45).

7. Utilisation du dispositif de mesure avec le dispositif de mesure optique (1) selon l'une quelconque des revendications précédentes, **caractérisée en ce que** le dispositif de mesure (1) prend la forme d'un objectif spécifique pour l'objet de mesure (15) dans une structure de mesure d'un capteur d'autofocus ou d'un interféromètre connu en soi, notamment d'un interféromètre laser, hétérodyne ou de lumière blanche.

8. Utilisation du dispositif de mesure avec le dispositif de mesure optique (1) selon la revendication 8, **caractérisée en ce que** le dispositif de mesure (1) est utilisé conjointement avec un capteur d'image (75) doté d'un logiciel d'analyse pour un double corrélogramme (80).
